# EUROPEAN PATENT APPLICATION

(11) **EP 4 148 985 A1**
(43) Date of publication of application: **15.03.2023**
(21) Application number: 22193311.2
(22) Date of filing: 31.08.2022
(51) Int. Cl.: H02S 40/10

(54) **SYSTEM FOR REMOTE IDENTIFICATION OF THE STATE OF PHOTOVOLTAIC PANELS WITH A CLEANING ARRANGEMENT**

(30) Priority: 08.09.2021 PL 43890421
(71) Applicant: SIEC BADAWCZA LUKASIEWICZ-INSTYTUT LOTNICTWA, 02-256 Warszawa (PL)
(72) Inventor: Kacprzak, Mariusz, 05-825 Grodzisk Mazowiecki (PL); Rotchimmel, Karol, 05-822 Milanówek (PL); Skoneczny, Hubert, 96-300 yrardów (PL); Kubiak, Katarzyna, 02-643 Warszawa (PL); Spiralski, Marcin, 05-090 Falenty (PL); B ben, Karol, 05-500 Piaseczno (PL); Sta czyk, Anna, 91-085 ód (PL); Szyma ski, Jakub, 02-380 Warszawa (PL); Buben, Krzysztof, 02-775 Warszawa (PL); Bartelmus, Kamil, 02-031 Warszawa (PL)
(74) Representative: AOMB Polska Sp. z.o.o.

(57) **Abstract**

The invention provides a system and a method for remote identification of the state of photovoltaic panels (8), with an arrangement for cleaning the panels, and comprising:
a robotic platform (12) comprising a self-propelled carrier frame (1), a drive assembly (2), an on-board controller (3) and a checking module that comprises an optoelectronic system (4) comprising at least one camera, a data analysis module (5), a cleaning module (6) and a lighting module (7), which system comprises an unmanned aircraft (13) comprising a data transmission system (11), a lighting system (10) and an optoelectric system (9) as well as self-propelled movable platform (1) equipped with a cleaning module (6).

## Description

### Field of the art

The invention provides a system and a method for remote identification of the state of photovoltaic panels in field, based on the use of remote sensing techniques and with an arrangement for cleaning panels. The optoelectric system is integrated with an unmanned aircraft and a cleaning module is mounted on a self-propelled carrier frame.

### Prior art

In the prior art there are known systems of diverse kinds intended for identification of the state of photovoltaic panels and methods for cleaning the panels. In the prior art, such systems are knowns as the ones of the publications WO 2017009823 A9 or WO 2012168070 A2 that describe solutions based on a construction comprising a self-propelled platform equipped with GPS or DGPS modules, as well as methods for verification of the level of soiling or damage of the individual panels. Movable platforms disclosed in these publications describe additionally a possibility for cleaning panels with the use of suitable means.

Additionally, documents KR 1020180138354 A, EP 3408175 B1 and US 20190359329 A1 describe methods for detection of defects, by means of unmanned aircrafts equipped with a thermal camera, pyrometer or visible light cameras used for detection of defects from a greater height, and GPS or DGPS modules intended for localization of the defective solar panels.

For identification of the state of photovoltaic panels (microcracks, defective soldered connections, PID effect, snail trails) several methods are used that are characterized by different time and cost contribution. The most common methods are based on: visual inspections - time-consuming method that enables detection only of a part of mechanic defects; thermovision - fast but poorly precise method that does not allow to detect minor defects; electroluminescence - precise but time-consuming method that requires provision of an external current source to the panels, current-voltage characteristics analysis - loading of the system with a resistor during current and voltage measurement.

### Summary of the invention

System for remote identification of the state of photovoltaic panels, with an arrangement for cleaning the panels, comprises: a robotic platform comprising a self-propelled carrier frame, a driving assembly, an on-board controller and a checking module that comprises an optoelectronic system comprising at least one camera, a data analysing module, a cleaning module and a lighting system. The system is characterized in that it comprises an unmanned aircraft comprising a data transmission system, a lighting system and an optoelectic system, as well as a self-propelled moving platform equipped with a cleaning module.

Preferably, the camera of the optoelectronic module has an area size of a single pixel larger than 10 mm.

Preferably, the camera of the optoelectronic module has a spectral resolution greater or equal to 4 spectral ranges.

Preferably, cameras are mounted on a stabilized suspension with an arrangement for recording the location of the cameras.

Preferably, in the arms of the cleaning module an inert arrangement is mounted intended for computation of a safe distance and pressure of a mat/sponge against the photovoltaic panel.

Preferably, the observation module comprises a camera having a radiation thermal range and/or the remaining spectral ranges within the range of 400-2500 nm.

Method for remote identification of the state of photovoltaic panels, and cleaning of the panels, is characterized in that it comprises the steps of: initial detecting by an unmanned aircraft of defective photovoltaic panels by means of an optoelectronic system; localizing by the unmanned aircraft the defective photovoltaic panels by means of a navigation camera, a system of GNSS or INS type; transmitting the collected data with the use of a data transmission system, to be analysed by a data analysis module of a robotic platform; establishing an arrival route for the robotic platform; arriving of the robotic platform at the photovoltaic panel; initiating cleaning process with the use of a cleaning module; verifying, during cleaning, the feedback from vision sensors and comparing database against model values while analysing in real time the cleaning progress and quality.

Preferably, analysis of the collected data is carried out automatically with the use of pointer analysis of the captured imaging.

Preferably, initialization of the inspection by the unmanned aircraft is induced by a signal from a system associated with a database that comprises weather data.

Preferably, initialization of the inspection by the unmanned aircraft is induced by a module that operates based on neural networks or machine learning algorithms.

Preferably, the on-board controller operates in an autonomous, automatic or manual modes.

Preferably, the robotic platform, based on the data from vision sensors, adjusts the amount of the cleaning agent sprayed according to the level of soiling of the photovoltaic panel.

### Brief description of the drawing

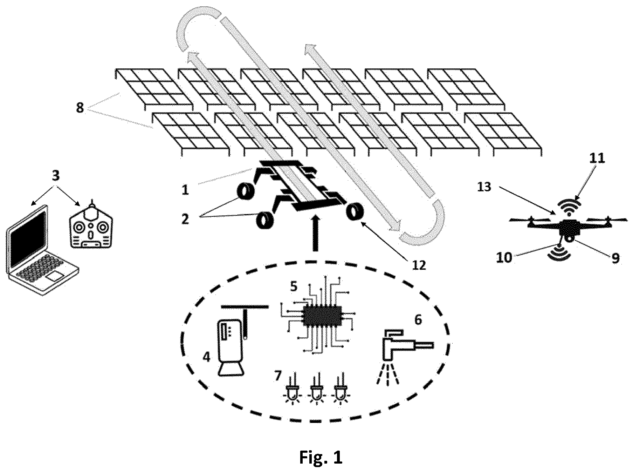

The invention is shown in the drawing where Fig. 1 shows schematically a view of a system according to the invention.

### Preferable embodiments of the invention

In a preferable embodiment, identification of the state of photovoltaic panels 8 is based on the use of remote sensing. The key element of the invention is an optoelectric system 4 and 9, consisting of: (a) a camera/cameras that record electromagnetic radiation thermal range and (b) a camera/cameras that record the remaining selected spectral ranges within the range of: 400 - 2500 nm. The area size of a single pixel (GSD) should not be smaller than 10 mm, at a spectral resolution not poorer than 4 spectral ranges, and the geometric resolution being better than 10 mm.

System for remote identification of the state of photovoltaic panels 8, with an arrangement for cleaning the panels, is comprised of: a self-propelled carrier frame 1 engaged with a drive assembly 2, controlled via an on-board controller 3 in predefined modes; and optoelectronic system 4 for recording electromagnetic radiation thermal range, calibrated and mounted on the carrier frame so that it records the image below the camera. The optoelectronic system 4 is mounted on a stabilized suspension with an arrangement for recording localization of the cameras.

The system of the unmanned aircraft 13 (BSP) comprises: an optoelectronic system 9 for capturing imaging of the photovoltaic panels 8 from air, a lighting system 10 for carrying out observation under uniform conditions, and a data transmission system 11 for the ground-based part. During measurement the photovoltaic panels 8 are below the self-propelled carrier frame 1; and monitoring is carried out with the use of an autonomous lighting system 7 for performing measurements under uniform lighting conditions; the recorded data in a form of spectra imaging comprising information on the intensity of reflection of electromagnetic waves are analysed with the use of a data analysis module 5; in a computing unit, the collected data are analysed to enable identification of the state of the photovoltaic panels 8; information concerning soling of the panels is used for performing cleaning actions with the use of a liquid applied by a cleaning module 6. The optoelectronic system 4 carries out control upon the performed cleaning actions, in order to verify correctness of operation of the photovoltaic panels 8. If further abnormalities are stated in electroluminescence of the photovoltaic panels 8 a microdefect test is performed with the use of recording cameras that use the remaining selected spectral ranges within the range of: 400 - 2500 nm comprised by the electrooptic system 4. The presented scheme of operation of the invention enables effective detection of defects and identification of the state of photovoltaic panels.

Effective detection of defects and identification of the state of the photovoltaic panels 8 is possible due to the electroluminescence effect. In the course of capturing photographs an electric charge should be applied to the photovoltaic panels 8.

Operation of the system is largely automatic, and operator input is minimal and is limited mainly to performing simple supervisory operations.

The solution may be used in the existing power stations that use photovoltaic panels 8. The optoelectric system 9 mounted on an aircraft is constructed so that it is possible to capture photographs of the photovoltaic panels 8 from a distance of at least 50 cm. The optoelectronic system 9 takes photographs when hovering above the photovoltaic panels 8, the captured photographs are sent to a computer on a robotic platform 12 wirelessly, and then they are analysed with the use of a data analysing module 5. It is required for the unmanned aircraft to maintain a stable position over the photovoltaic panel 8 and to be able to perform an autonomous patrolling flight in order to obtain data for the analysis. A movable platform is driven with the use of an electric motor, and power supply for the platform is provided by means of high-performance battery packs. Fastening of the optoelectric system 9 should alleviate vibrations of instruments, in order to enhance data quality.

The technical subject-matter of the invention consists on the use of a robotic platform 12 and an unmanned aircraft 13 (along with the components) in power stations that use photovoltaic panels 8. Operations related to identification of the state of the photovoltaic panels 8 and cleaning of the panels are performed in field conditions.

A method for identification of the state of photovoltaic panels 8 and cleaning the panels, with the use of the aforementioned methods, according to the invention is characterized in that:
A. over the photovoltaic panels 8, on the unmanned aircraft 13 there are mounted cameras that capture photographs of the object being inspected. In order to enhance effectiveness of identification of the state of the photovoltaic panels 8 and effectiveness of the cleaning system, capturing data may be effected in cycles at times predefined by a predicting algorithm.
B. then the recorded data, in a form of spectra imaging of the object under inspection and comprising information concerning the intensity of electromagnetic wave reflection in a form of singular pixels, and the location of the photovoltaic panel 8 in the farm, are sent to a computer comprising a data analysis module 5 mounted on the movable platform;
C. in a computing unit the main automatic analysis of the collected data is carried out. Effectivity of identification of the state of the photovoltaic panels 8 depends on the algorithms used. Defects of all kinds to the photovoltaic panels 8 result in appearance of changes in pixel values (relative to the reference values);
D. data transfer system; robotic platform 12 is equipped with a data transfer module (for control data and telemetric data)
   - Robotic platform 12, based on the analysis results, decides on the necessity of cleaning and on optimal arrival route to the photovoltaic panel 8.
   - The user has a possibility to send control signals to the movable platform and to program its automatic movement route. The user receives images from the navigation camera at the control station.
   - Telemetric modules transmit to the control station and to the data base the information concerning: current location of the robotic platform 12 and the unmanned aircraft 13 (latitude and longitude), power supply level, presently performed action (identification of the state of the photovoltaic panel 8 / cleaning) and sends in a defined frame the information concerning the state of each of the photovoltaic panels 8 for which such analysis has been carried out, and such data will make it possible for a map of the state of exploitation of the photovoltaic panels 8 to be built.
E. To enhance proper operation of a module with neural network it is necessary to build a suitable database in advance (as a minimum time the interval of 1 year should be assumed). It is possible to send such data to the robotic platform 12. Then, based on these data a network is generated being basis for further predictions. If no such data are provided, measurements of atmospheric conditions and data from sensors will be collected by the robotic platform 12 during its operational time (such a solution may involve limitation on preciseness of predictions).

The arrangement of the invention is characterized in that analysis of the collected data is carried out automatically, with the use of pointer analysis of the captured imaging.

The invention is suitable for servicing exploitation of photovoltaic farms in a row array. Unmanned aircraft 13 effects flights over the rows of photovoltaic panels 8 and stops oved each of them in order to capture data, while an array of optoelectronic sensors 4 is to image the photovoltaic panel 8 at an angle of 90 degrees. Self-propelled carrier frame 1 will move so that a row of panels is between the wheels of this frame.

Data from the optoelectric system 9 of the unmanned aircraft are transferred to a data analysis computer 5 mounted on a robotic platform 12. According to the analysis results, the computer proposes an arrival route for the robotic platform 12 to perform cleaning of the panel. This division greatly improves cleaning and servicing of the entire photovoltaic farm.

Self-propelled carrier frame 1 will be connected to a drive assembly 2 controlled by means of an on-board controller 3. The on-board controller 3 will be able to operate in autonomous, automatic or manual modes.
A. The autonomous mode, as considered by the Inventors, will consist on unattended operation, fully automated, including setting out a route based on suitable algorithms, including optionally algorithms of Computer Vision and/or Machine Learning types. In this mode, positioning of the platform between rows of photovoltaic panels 8 will be carried out automatically based on the processed images from the navigation camera and/or systems of GNSS and/or INS types.
B. The automatic mode provides a mission scheduled by the operator who controls the robotic platform 12 in place or remotely. The current status of accomplishment of the mission may be displayed on the control station that comprises a screen.
C. The manual mode provides full operator control. The operator may by supported by data from the navigation camera and/or GNSS and/or INS systems, and/or scheduled route displayed on the control station comprising a screen.

Drive assembly 2 of the invention will operate based on an electric or hybrid motor, powered with the use of a battery mounted on-board. The battery would possibly use an induction charging station on the photovoltaic farm. Energy of the battery will be used for powering: the driving assembly, steering and communication assembly, and sensors mounted on the platform.

**Sensors:** On a vehicle there will be mounted an array of cameras to enable control of the state of the individual photovoltaic panels 8. The cameras will be mounted on a construction secured to the unmanned aircraft 13 so that the effective operational range thereof cover the entire area of the individual photovoltaic panels 8 within a given series. Measurement of parameters of the individual photovoltaic parameters 8 will be carried out during movement of the robotic platform 12 along the series of photovoltaic panels 8. Upon connection of the series of photovoltaic panels 8, over which the unmanned aircraft 13 is to fly, to a current with predefined parameters, electroluminescence effect will be generated, i.e. the photovoltaic panels 8, instead of receiving infrared solar radiation and convert it into electric current (as during their normal operation), will receive electric current and convert it into radiation within the infrared range. The sensors will be protected against dirt and dust generated during cleaning of the photovoltaic panels 9. The sensors protection arrangement will be equipped with an internal cleaning system - a small wiper.

**System for detecting soling and general state of panels:** Initiation of inspection carried out by the unmanned aircraft 13 may be induced by a signal from a system associated with the database comprising weather data. Exceeding of specific values (e.g., a specified snowfall) may induce initiation of the procedure of inspection and soiling removal. Furthermore, the procedure may be initiated by an operator's command or by cyclic scheduling (e.g., once a week). An alternative concept for establishing time of washing photovoltaic panels 8 is the use of an additional module for generating predictions on the state of inoperability of a photovoltaic panel 8 (e.g., caused by soiling, to great amount of snow on the panel, etc.). Such module would operate based on neural networks - it is possible to use DNN - deep neural networks, or Machine Learning algorithms. Generating predictions would provide regression relative to the most important parameters for the state of inoperability of a panel. The most important ones will include: weather conditions (wind velocity, air humidity, atmospheric pressure) and data from sensor also taken into consideration on analytical methods. The use of a high accuracy neural network model may limit the monthly number of missions of washing photovoltaic panels 8. This solution works under conditions where washing may be carried out more frequently than once a week.

During movement of the platform, the cameras/camera that record the electromagnetic radiation thermal range will make measurement of the amount of radiation of the panel within the thermal range (LWIR). Then, the measurement result will be transmitted to the database and with the use of dedicated algorithms the measured values will be compared to the values corresponding to operative and clean photovoltaic panels 8. If considerable differences are stated, the panels will be classified as soiled. This will cause a change in the status in the database, and this will initiate actuation of the cleaning module 6 to remove soling from the panel. With the cleaning procedure completed the robotic platform 12 will initiate testing again and change the status in the database into "test" to initiate another measurement of the panel. If after the performed cleaning procedure the values of the electroluminescence measured again still show a considerable difference relative to operative photovoltaic panels 8, then its status in the base will be changed into "defective" and an information will be sent to the photovoltaic farm control system concerning the necessity to check the photovoltaic panel 8 by a service technician. Instead of a washing attempt, it is possible to use a neural network by means of which predictions in the state of the panel ("for washing", "detective") may be generated. In this case the meaningful data may be above described measurements from the sensors.

**Sensor for detection of microdefects in panels:** When the control of soling and general state of the photovoltaic panels 8 is completed, a test for microdefects will be carried out. For this purpose the cameras/camera that record the remaining selected spectral ranges within the range of: 400 - 2500 nm will be used. The values obtained within the selected ranges will be recorded in the database and then compared to the model values for operative photovoltaic panels 8. If considerable differences are detected, the information on the kind and localization of the detected microdefect will be recorded in the database, and then the information will be sent to a photovoltaic farm control system concerning the necessity to check the photovoltaic panel 8 by a service technician.

When the inspection procedure is completed the robotic platform 12 may return to its initial position or to a docking station connected to an electric charger and switch into the stand-by mode or it may become disconnected till the time of another inspection.

**Cleaning module 6:** it will be equipped with several nozzles to spray a cleaning agent. For better effectiveness the cleaning agent will be heated. The agent will be sprayed under pressure. Information on the location of the soiling, which is the location for spraying the agent, will be sent to the nozzle controlling computer based on the analysis of the image from optic sensors. Feedback on the location of the soiling will be similarly routed as for localization of microcracks. Feedback from the vision sensors will be compared against the database with the model values. The on-board computer for vision data processing will be currently analyse the location of the soiling, the cleaning progress and the quality of the operation performed.

A main cleaning arrangement will be equipped with arms that have cleaning mats/sponges adjusted to the panel structure. In the arms inert arrangements will be mounted for providing information constituting base for the on-board computer to compute a safe distance and a pressure of a mat/sponge against the photovoltaic panel.

In the drawing the following reference numerals are used:
1 - self-propelled carrier frame
2 - drive assembly
3 - on-board computer
4 - optoelectronic system
5 - data analysis module
6 - cleaning module
7 - lighting module
8 - photovoltaic panels
9 - optoelectronic system
10 - lighting system
11 - data transmission system
12 - robotic platform
13 - unmanned aircraft

## Claims

1. System for remote identification of the state of photovoltaic panels (8), with an arrangement for cleaning the panels, comprising:
a robotic platform (12) comprising a self-propelled carrier frame (1), a drive assembly (2), an on-board computer (3) and a checking module comprising an optoelectronic system (4) comprising at least one camera, a data analysis module (5), a cleaning module (6) and a lighting system (7)
**characterized in that** it comprises an unmanned aircraft (13) comprising a data transmission system (11), a lighting system (10) and an optoelectric system (9), and
a self-propelled moving platform (1) equipped with a cleaning module (6).

2. System according to claim 1, **characterized in that** the camera of the optoelectronic module (9) has an area size of a singular pixel greater than 10 mm.

3. System according to claims 1 or 2, **characterized in that** the camera of the optoelectronic module (9) has a spectral resolution grater or equal to 4 spectral ranges.

4. System according to any of claims 1-3, **characterized in that the** cameras are mounted on a stabilized suspension with an arrangement for recording location of the cameras.

5. System according to any of claims 1-4, **characterized in that** in the arms of the cleaning module (6) an inert arrangement is mounted for computing a safe distance and a pressure of a mat/sponge against the photovoltaic panel (8).

6. System according to any of claims 1-5, **characterized in that** the observation module comprises a camera having a radiation thermal range and/or the remaining spectral ranges within the range of 400-2500 nm.

7. Method for remote identification of the state of photovoltaic panels (8) and cleaning the panels, **characterized in that** it comprises the steps of:
- initial detection by the unmanned aircraft (13) of defective photovoltaic panels (8) via an optoelectronic system,
- localizing by the unmanned aircraft (13) the defective photovoltaic panels (9) via a navigation camera, a system of GNSS or INS type,
- sending the collected data with the use of a data transmission system (11) for analysis by a data analysing module (5) of the robotic platform (12),
- determining the arrival route of the robotic platform (12),
- arriving of the robotic platform (12) at the photovoltaic panel (8),
- initializing of cleaning process with the use of the cleaning module (6),
- verifying during cleaning the feedback signal from vision sensor and comparing database with model values while analysing in real time the progress and quality of cleaning.

8. Method according to claim 7, **characterized in that** analysis of the collected data is carried out automatically with the use of pointer analysis of the captured imaging.

9. Method according to claims 7 or 8, **characterized in that** initializing of inspection by the unmanned aircraft (13) is induced by a signal from a system associated with the database comprising weather data.

10. Method according to any of claims 7-9, **characterized in that** initializing of inspection by the unmanned aircraft (13) is induced by a module operating based in neural networks or machine learning algorithms.

11. Method according to any of claims 7-10, **characterized in that** the on-board controller operates in an autonomous, automatic or manual modes.

12. Method according to any of claims 7-11, **characterized in that** the robotic platform (12) based on the data from vision sensors adjusts the amount of the sprayed cleaning agent according to the level of soiling of the solar panel (8).
